Europäisches Patentamt

European Patent Office

Office européen des brevets

(11) Publication number: 0 516 217 A2

# EUROPEAN PATENT APPLICATION

(21) Application number: 92201428.7

(22) Date of filing: 20.05.92

(51) Int. Cl.5: G11B 15/675, G11B 15/07

(30) Priority: 27.05.91 JP 149194/91

(43) Date of publication of application:
02.12.92 Bulletin 92/49

(84) Designated Contracting States:
DE FR GB IT

(71) Applicant: N.V. Philips' Gloeilampenfabrieken
Groenewoudseweg 1
NL-5621 BA Eindhoven(NL)

(72) Inventor: Yamaura, Noriaki
c/o INT. OCTROOIBUREAU B.V. Prof.
Holstlaan 6
NL-5656 AA Eindhoven(NL)

(74) Representative: Van Weele, Paul Johannes
Frits et al
INTERNATIONAAL OCTROOIBUREAU B.V.
Prof. Holstlaan 6
NL-5656 AA Eindhoven(NL)

(54) Cassette tape recorder having a cassette tape loading device.

(57) A cassette tape recorder having a cassette tape loading device comprising a cassette carrier which reciprocally moves between a cassette setting position and a cassette record/read position.

A sliding unit is supported by the cassette carrier so as to be slidable along the shifting direction thereof and a cassette discrimination mechanism is mounted on the sliding unit and engages with the cassette on the cassette carrier to discriminate it between DCC and ACC. The further comprises a first and a second stopper member.

The first stopper member prevents the sliding unit from shifting, before the end point of the forward stroke of the cassette carrier, in such a way that the cassette discrimination mechanism engages with the cassette on the carrier according to relative shifting of the sliding unit to the cassette carrier.

The second stopper member prevents the sliding unit from shifting, before the end point of the backward stroke of the cassette carrier, in such a way that the cassette discrimination mechanism is released from the cassette according to relative shifting of the sliding unit to the cassette carrier.

FIG.1

EP 0 516 217 A2

The invention relates to a cassette tape recorder having a cassette loading device for, especially the one wherein both of an analog compact cassette tape (hereinafter referred to as "ACC") and a digital compact cassette tape (hereinafter referred to as "DCC") can be used in common.

The digital audio cassette tape recorder (hereinafter referred as to "DAT" recorder) wherein reading and recording is performed with a digital signal has a complicated construction and is expensive because it uses a rotary head.

A cassette tape recorder which uses the ACC is now widely spread because of its easy operation.

However, since there is no compatibility between both of the tape recorders, a cassette tape recorder which is used exclusively for the DAT and that exclusively for the ACC are required to record on and reproduce from those tapes.

Therefore, realization of a cassette tape recorder which has a simple construction and has compatibility between the ACC and the DAT in recording/reading has been expected.

In order to use the ACC and the DAT in common in one cassette tape recorder, it is basically required that the shape, thickness, etc. of the DAT be substantially the same as those of the ACC to the extent that the DCC can operate in common with the ACC. On the other hand, it is needed that such shapes of the ACC and the DAT are different from each other to such extent that it can be detected whether the cassette is the ACC or the DAT when it is put on or inserted in a tray of the cassette tape recorder.

Then, a compact cassette incorporating a digital tape (hereinafter referred to as "DCC") which is adaptable to a cassette tape recorder system of the ACC (including operation system) was developed. The DCC has a new construction which is completely different from that of the DAT.

The ACC has windows which are necessary for bringing a head into contact with the magnetic tape and for other purposes. But, the DCC is easily affected by the dust, and when it is removed from the cassette tape recorder, the dust entering through the window could be the reason of an error in recording/reproducing. Therefore such windows should be covered by a dust-protection-cover under such conditions.

An object of the invention is to provide, in a cassette tape recorder wherein both of the ACC and the DCC are compatibly readable/recordable, a loading device in which the cassette can be detected by a simple mechanism and a dust-protection cover can be opened when the DCC is loaded.

In order to solve the above object, the invention is characterized by comprising a cassette carrier which shifts a cassette tape forward and backward between a cassette setting position and a cassette record/read position; a sliding unit which is supported by the cassette carrier so as to be slidable along the shifting direction thereof; a cassette discrimination mechanism which is mounted on the sliding unit and engages with the cassette on the cassette carrier to discriminate it between DCC and ACC; a first stopper member which prevents the sliding unit from shifting, before the end point of the forward stroke of the cassette carrier, in such a way that the cassette discrimination mechanism engages with the cassette on the carrier according to relative shifting of the sliding unit to the cassette carrier; and a second stopper member which prevents the sliding unit from shifting, before the end point of the backward stroke of the cassette carrier, in such a way that the cassette discrimination mechanism is released from the cassette according to relative shifting of the sliding unit to the cassette carrier.

According to the above-described construction, when the sliding unit supported in the cassette carrier is stopped by the stopper member, the cassette on the cassette carrier is detected by relative movement of the sliding unit to the cassette carrier.

Brief explanation of the figures:
Figure 1, a perspective view showing an embodiment of the cassette discrimination device of the tape recorder according to the invention,
Figure 2, a plane view of the rocking plate mounting the discrimination mechanism,
Figure 3, a rear view of the rocking plate,
Figure 4, a rear view of the rocking plate in operation,
Figure 5, a front perspective view of the DCC,
Figure 6, a front perspective view of the DCC of which dust-protection cover is opened,
Figure 7, a rear perspective view of the DCC,
Figure 8, a rear perspective view of the DCC of which dust-protection cover is opened,
Figure 9, a side view of the cassette discrimination mechanism,
Figure 10, a side view of the cassette discrimination mechanism shifted before the end point of the forward/backward stroke of the cassette carrier,
Figure 11, a front view of the DCC of which dust-protection cover is just before to be opened, and
Figure 12, a front view of the ACC in a status where it is detected.

The invention is explained below by referring to the figures showing an embodiment.

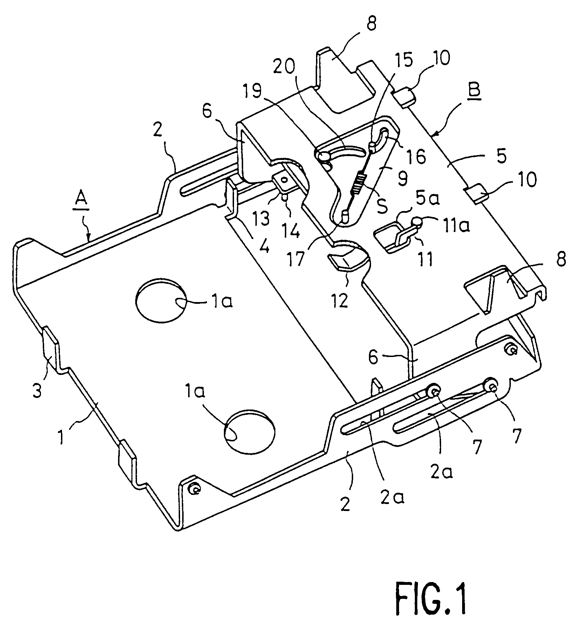

In Fig. 1, A is a cassette carrier which shifts a cassette tape forward and backward between a cassette setting-position and a cassette record/reading-position. 1 is a base plate on which the cassette is placed, 1a is a circular opening which corresponds to a hub hole of the cassette side, 2, 2 are side plates which operate also as a right/left-positioning plates and 3, 4 are stiffening plates which define the front/back position of the cassette.

The sliding unit B which is slidable along the shifting direction thereof is supported on the upper side of the cassette carrier A. 5 is a top plate and 6, 6 are right/left side plates which form the sliding unit. The sliding unit B is supported slidably on the carrier A by inserting pin shafts 7 provided on the side plates 6, 6 in long guide-holes 2a formed in the side plates 2, 2 of the carrier. At the right/left sides of the sliding unit, projecting plates 8, 8 which extend upward are provided for the purpose described later.

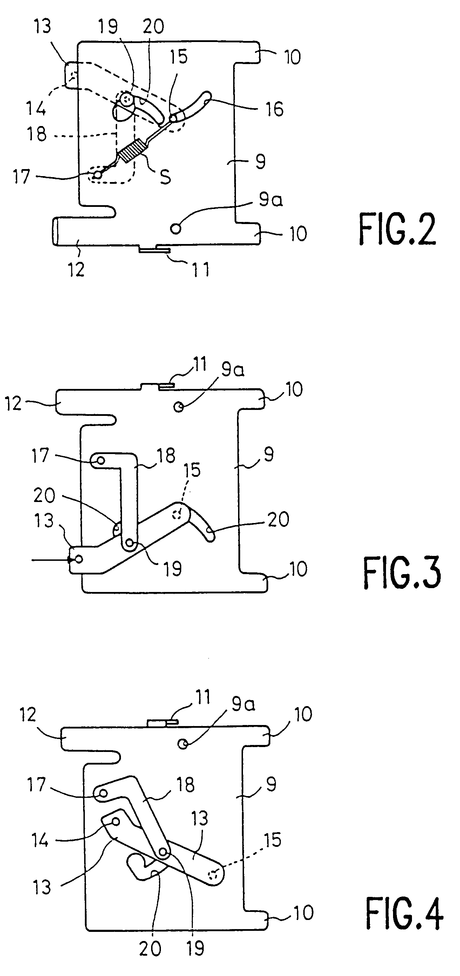

On the inner surface of the top plate 5 of the sliding unit B, a cassette discrimination mechanism (Figs. 2 - 4) cooperates with the sliding unit is mounted. 9 is a rocking plate which forms the discrimination mechanism and is supported rockably upward from the forward-bent position toward the base plate 1 for carrying the cassette. For this purpose, the rocking plate 9 has a protruded tail-plates 10 at its back which pierce and are supported at the back part of the top plate 5, and an L-shaped hook piece 11 which protrudes at its center part and is hooked at a window hole 5a of the top plate 5. A pin 11a of the top plate 5, which is inserted into a guide hole 9a provided around the hook piece 11 on the rocking plate 9. The rocking plate 9 can shift downward with supposing points at the tale plate 10 within a stroke of the hook piece 11, according to its own weight, and is guided by a guide pin 11a not to horizontally shift.

The rocking plate 9 comprises an engaging arm plate 12 which is bent upward and a separate engaging arm plate 13, which is provided pivotally on the lower surface. The pivotable engaging arm 13 has a engage protrusion 14 at the distal end. A guide pin 15 provided at the proximal end of the engaging arm 13 is inserted in a curved guide hole 16 of the rocking plate 9. The middle part of the pivotable engaging arm plate 13 and the distal end of an L-shaped link 18 which is pivotable about the shaft 17 are connected pivotally by the pin 19. The fin shaft 19 is inserted to another curved guide hole 20. S is a spring spanned between the pin 15 and the shaft 17.

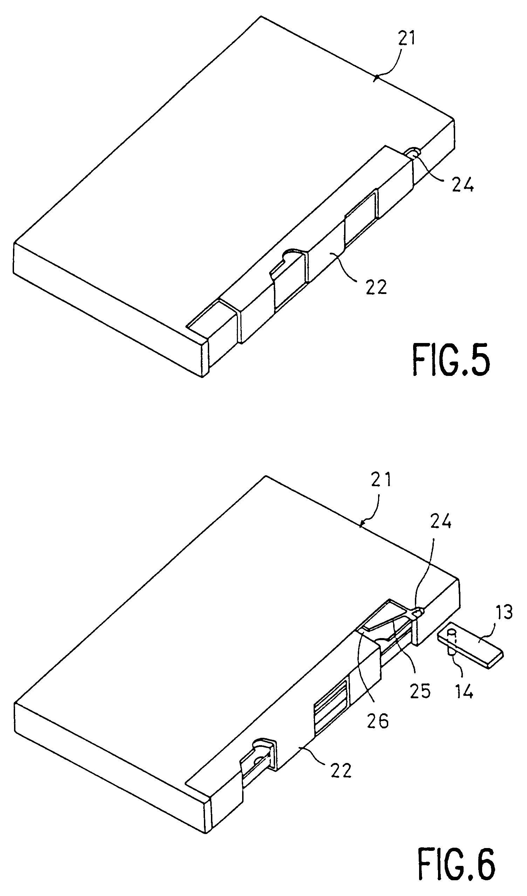

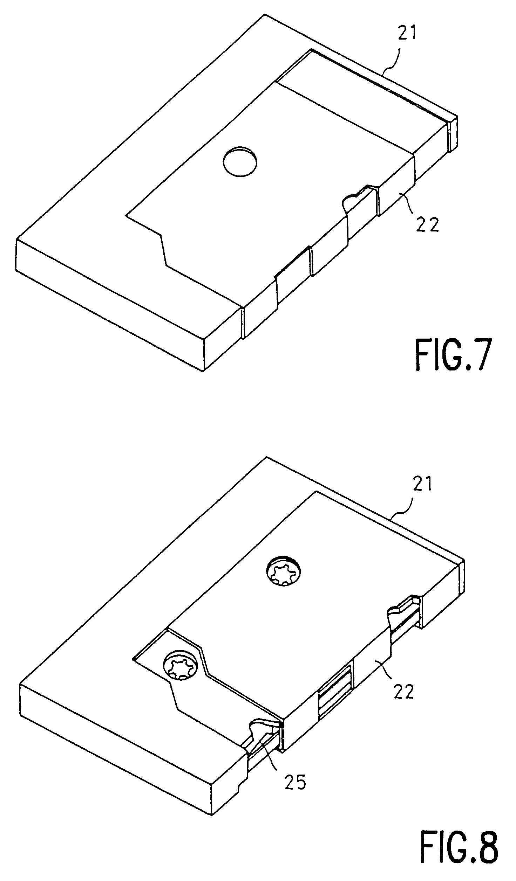

A digital compact cassette (DCC) is denoted with the numeral 21 in Figs. 5 to 8. The cassette 21 has a dust-protection-cover 22 which is slidable in the longitudinal direction of the cassette (in the travelling direction of the magnetic tape) and shut down wholly the hub holes and the openings exposing the tape. The dust-protection cover 22 is kept at the closing position according to the incorporated resilient means.

On the surface of the cassette 21 which has no hub holes (the surface upwardly disposed when the surface having the hub holes is placed on the base plate) at one end of the dust-protection-cover 22, a concavity part 24 which receives the protrusion 14 of the pivotable engaging arm 13, a taper edge 25 which guides the received protrusion in such a way that the received protrusion 14 is moved at an angle to the sliding direction of the dust-protection cover and a concavity part 26 which receives the protrusion 14 which has been guided at the taper edge are provided.

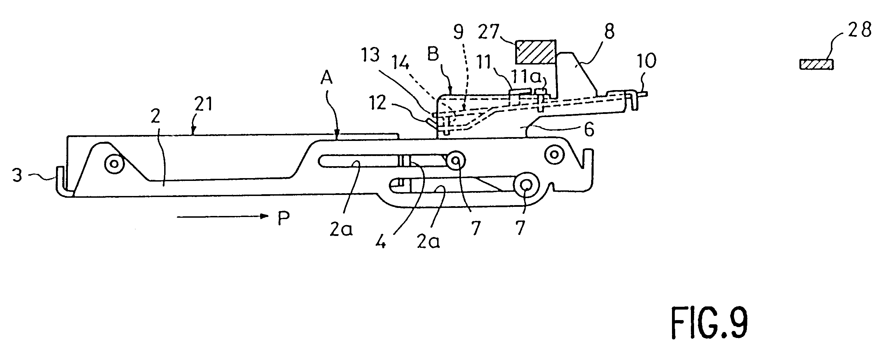

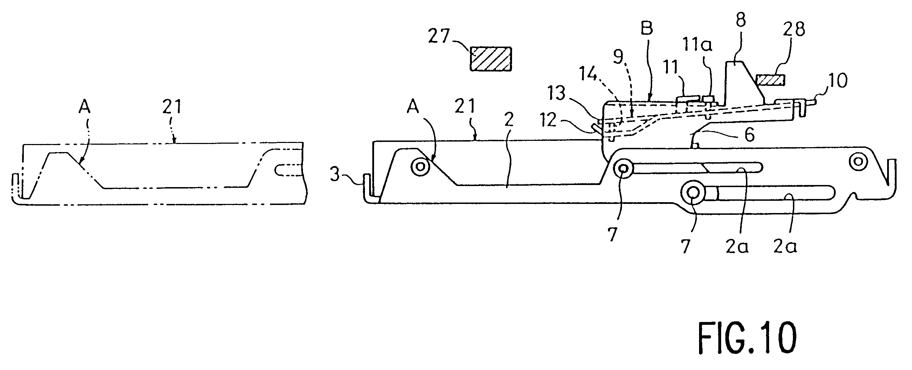

Operation of detecting the DCC is shown in Fig. 9, Fig. 10 and Fig. 11. The DCC 21 has a construction as shown in Fig. 5 to 8. The cassette 21 is placed on the base plate 1 of the carrier A which shifted forward in the arrow direction P by the driving mechanism which is not shown. When the carrier is shifted forward, the sliding unit B, which is supported by the carrier, is also shifted in the same direction. By that shift, the protrusion plates 8 of the sliding unit B leave the stopper 27 which is located at the beginning point of the forward stroke of the carrier and engages with the stopper 28 which is located before the end point of the forward stroke of the cassette carrier. By that engagement, the sliding unit is prevented from further shifting, and then only the carrier A shifts. Then, the engaging arm plate 12 of the rocking plate 9 supported by the relatively shifting sliding unit B passes over the surface of the cassette 21 and the protrusion 14 of the other engaging arm plate 13 gets into the concavity part 24 of the cassette 21 (Fig. 6) and is brought into contact with the end of the dust-protection cover 22. At that time, a component force having a direction which has a right angle to the shifting direction of the cassette is exerted in the link mechanism including the protrusion 14. By this component force, the dust-protection cover 22 slides to the opening position against the force of incorporated resilient means. During the dust-protection cover 22 slides, the protrusion 14 is guided along the taper edge 25 of the cassette and gets into the protrusion 26, whereby the dust-protection cover is prevented from sliding. When the dust-protection cover is completely opened, the carrier A is prevented from shifting by the guide long-hole 2a. Operation of the link mechanism including the protrusion 14 is shown in Figs. 2 to 4.

Next, the carrier A and the sliding unit B, etc. shift downward to the cassette record/read position by the elevator mechanism which is not shown, and explanation thereof is omitted.

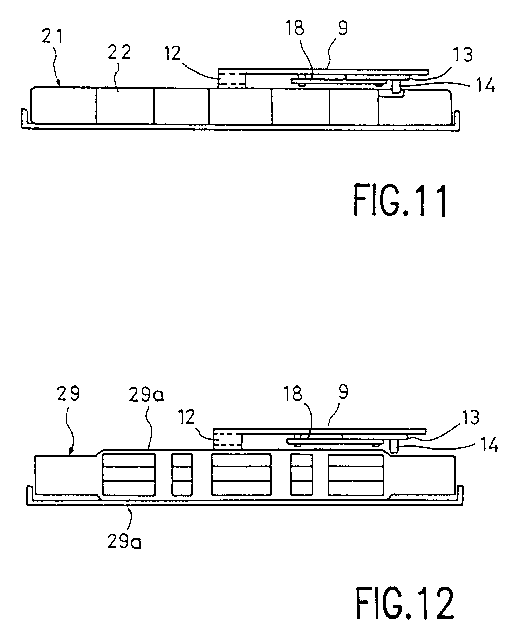

Operation of detecting the ACC is shown in Fig. 12. As shown by the numeral 29, the ACC is thick at the tape-opening side because there is a protrusion part 29a. Therefore the curved engaging arm plate 12 runs onto the protrusion. Then the rocking plate 9 is shifts upward, whereby the protrusion 14 of the engaging arm plate 13 passes without touching the cassette.

The DCC and the ACC can be detected by the operation described above and also the dust-protection cover of the DCC can be opened when it is loaded.

After recording/reading is finished, the carrier A and the sliding unit B return to the upper position. Then, the carrier A shifts backward by the driving mechanism in the same direction of the movement of the sliding unit B. By that, the protrusion plates 8 of the sliding unit B engage with the stopper 27 which is located before the end point of the backward stroke of the cassette carrier. Thus, the sliding unit B is prevented from shifting and only the carrier A further shifts. When, by this relative movement, the protrusion 14 of the engaging arm plate 13 of the rocking plate 9 which is supported by the sliding unit B is released from the concavity 26 of the cassette 21 and the dust-protection-cover 22 of the cassette 21 slides and returns to the closed position according to incorporated resilient means.

As described above, according to the invention, the cassette forwarding device can be obtained, which cannot only forward a cassette from the set position to the record/read position but also discriminate a DCC and an ACC in the forward stroke of the cassette.

**Claims**

1. A cassette tape recorder having a cassette tape loading device is characterized in that the recorder comprises:
   - a cassette carrier which reciprocally moves between a cassette setting position and a cassette record/read position;
   - a sliding unit which is supported by the cassette carrier so as to be slidable along the shifting direction thereof;
   - a cassette discrimination mechanism which is mounted on the sliding unit and engages with the cassette on the cassette carrier to discriminate it between DCC and ACC;
   - a first stopper member which prevents the sliding unit from shifting, before the end point of the forward stroke of the cassette carrier, in such a way that the cassette discrimination mechanism engages with the cassette on the carrier according to relative shifting of the sliding unit to the cassette carrier; and
   - a second stopper member which prevents the sliding unit from shifting, before the end point of the backward stroke of the cassette carrier, in such a way that the cassette discrimination mechanism is released from the cassette according to relative shifting of the sliding unit to the cassette carrier.

FIG.1

FIG.2

FIG.3

FIG.4

FIG.5

FIG.6

FIG.7

FIG.8

FIG.9

EP 0 516 217 A2

FIG.10

FIG.11

FIG.12